# FASCICULE DE BREVET EUROPEEN

(11) **EP 1 245 446 B1**
(45) Date de publication et mention de la délivrance du brevet: **26.05.2004**
(21) Numéro de dépôt: 02290780.2
(22) Date de dépôt: 28.03.2002
(51) Int. Cl.: B60R 7/04

(54) **Console centrale amovible**
Abnehmbare Mittelkonsole
Removable central console

(30) Priorité: 30.03.2001 FR 0104356
(43) Date de publication de la demande: 02.10.2002
(73) Titulaire: Sai Automotive Allibert Industrie, 92735 Nanterre (FR); Renault s.a.s., 92100 Boulogne Billancourt (FR)
(72) Inventeur: Reant, Richard, c/o SAI Auto. Allibert Ind., 60110 Meru (FR); Morel, Jean-Pierre, c/o SAI Auto. Allibert Ind., 60110 Meru (FR); Carrencotte, Laurent, c/o SAI Auto. Allibert Ind., 60110 Meru (FR); Barre, Philippe, c/o SAI Auto. Allibert Ind., 60110 Meru (FR); Feyel, Marie-Claire, 78000 Versailles (FR); Marceau, Thierry, 92500 Rueil-Malmaison (FR); Panhelleux, Jérome, 75015 Paris (FR)
(74) Mandataire: Lerner, François

(56) Documents cités:
- EP-A- 1 197 382
- DE-U- 29 611 382
- FR-A- 2 789 641
- PATENT ABSTRACTS OF JAPAN vol. 1997, no. 08, 29 août 1997 (1997-08-29) & JP 09 109778 A (TOYOTA AUTO BODY CO LTD), 28 avril 1997 (1997-04-28)

## Description

La présente invention concerne un dispositif pour habitacle de véhicule automobile comprenant une console centrale.

Un tel dispositif, destiné à être disposé entre les sièges, en particulier entre les sièges avant, sert notamment de rangement ou de support.

Le document CA-A-2 245 311 décrit un tel dispositif, comprenant outre la console centrale, une glissière destinée à être fixée au plancher du véhicule et des moyens de guidage et de retenue coulissant à l'intérieur de la glissière. La glissière s'étend suivant une direction d'allongement longitudinale et présente une ouverture latérale s'étendant également suivant cette direction longitudinale. Lesdits moyens de guidage et de retenue s'étendent à travers ladite ouverture latérale et sont liés à la console.

L'invention a pour but d'améliorer la fonctionnalité de la console centrale, tout en proposant un dispositif simple et donc peu onéreux, facile d'utilisation et robuste. Pour ce faire, l'invention propose que lesdits moyens de guidage et de retenue soient mobiles par rapport à la glissière entre une position de retenue dans laquelle ils sont maintenus à l'intérieur de la glissière et une position d'extraction autorisant la désolidarisation de la glissière en passant à travers ladite ouverture latérale.

Ainsi, on pourra moduler davantage l'habitacle du véhicule en retirant la console centrale. En outre, le fait de faire passer les moyens de guidage et de retenue latéralement à travers ladite ouverture permet d'une part de ne laisser subsister en place dans le véhicule que la glissière et d'autre part de noyer la glissière dans le plancher du véhicule. Par conséquent, cette solution permet de profiter pleinement de l'espace libéré par la console et d'éviter d'endommager les moyens de guidage et de retenue.

Afin de faciliter l'utilisation du dispositif, l'invention propose que le mouvement des moyens de guidage et de retenue entre la position de retenue et la position d'extraction comprenne un mouvement de rotation.

Ce mouvement de rotation, distinct du mouvement de coulissement de la console, permet de réduire le risque de libération inopinée de la console par rapport à la glissière.

Afin de réduire encore ce risque, l'invention propose que les moyens de guidage et de retenue ne soient mobiles entre la position de retenue et la position d'extraction que dans une (des) zone(s) déterminée(s) le long de la glissière.

Selon une caractéristique complémentaire, l'invention propose que :
- l'ouverture latérale présente au moins une zone de coulissement présentant transversalement à la direction longitudinale une largeur sensiblement constante et une zone d'extraction de plus grande largeur, transversalement à la direction longitudinale,
- les moyens de guidage et de retenue comprennent un patin de section non circulaire pivotant à l'intérieur de la glissière entre lesdites positions relatives de retenue et d'extraction,
- en position de retenue, les moyens de guidage présentent une largeur supérieure à celle de l'ouverture latérale, y compris dans la zone d'extraction,
- en position d'extraction, les moyens de guidage présentent une largeur comprise entre la largeur de l'ouverture latérale dans la zone de coulissement et la largeur de l'ouverture latérale dans la zone d'extraction.

De ce fait, l'extraction de la console ne peut intervenir si le patin est placé par l'utilisateur en position de retenue et ce indépendamment du coulissement de la console par rapport à la glissière. En outre, même si le patin est placé en position d'extraction, encore faut-il qu'il soit amené dans la zone d'extraction pour libérer la console. Ceci permet de réduire encore le risque de séparation entre la console et la glissière suite à une mauvaise manipulation ou à l'intervention, non souhaitée par l'utilisateur, d'enfants "jouant" avec le dispositif.

Pour remplir efficacement ses fonctions, tant en position de retenue qu'en position d'extraction, le patin présentera avantageusement une forme sensiblement rectangulaire.

Afin de faciliter encore l'utilisation du dispositif, l'invention propose que :
- les moyens de guidage et de retenue comprennent en outre une tige de commande liée à l'une de ses extrémités au patin et passant à travers ladite ouverture latérale, et
- la tige de commande présente en regard de l'ouverture latérale une section non circulaire de largeur sensiblement égale à la largeur de l'ouverture latérale dans la zone de coulissement, afin d'empêcher la rotation des moyens de guidage et de retenue relativement à la glissière dans ladite zone de coulissement.

Ainsi, tant que le patin est en regard de la zone de coulissement il reste dans la position dans laquelle ont l'a placé, en position de retenue ou en position d'extraction, et il peut être déplacé d'une position vers l'autre lorsqu'il est en regard de la zone d'extraction.

Afin de faciliter encore l'utilisation du dispositif, selon une caractéristique avantageuse de l'invention, la tige de commande traverse la console centrale, de sorte que l'on peut aisément manipuler les moyens de guidage et de retenue tant pour faire coulisser la console que pour l'extraire.

Afin de maintenir la console dans une position déterminée le long de la glissière, l'invention propose que le dispositif comporte des moyens d'indexation comprenant :
- des trous disposés dans la glissière et répartis suivant la direction longitudinale, et
- une tige d'indexation liée aux moyens de guidage et de retenue et mobile entre position active dans laquelle elle s'insère dans les trous de la glissière et une position inactive escamotée autorisant un coulissement suivant la direction longitudinale entre les moyens de guidage et de retenue et la glissière.

L'invention propose en outre avantageusement que :
- la tige de commande soit creuse et reçoive intérieurement la tige d'indexation,
- la tige de commande et la tige d'indexation soient chacune reliées à une poignée de commande, lesquelles poignées de commande coulissent l'une dans l'autre.

Ainsi, on peut aisément escamoter les moyens d'indexation, faire coulisser la console et commander les moyens de guidage et de retenue.

De plus, l'invention propose pour empêcher la rotation de la console autour des moyens de guidage et de retenue, que le dispositif comprenne en outre au moins un ergot lié à la console centrale et coulissant dans la glissière.

L'invention va apparaître encore plus clairement dans la description qui va suivre, faite en référence aux dessins annexés dans lesquels :
- la figure 1 est une vue schématique en coupe médiane d'un dispositif conforme à l'invention,
- la figure 2 est une vue en perspective des moyens de guidage et de retenue du dispositif de l'invention,
- la figure 3 est une vue en coupe du dispositif suivant la ligne repérée III-III à la figure 1.

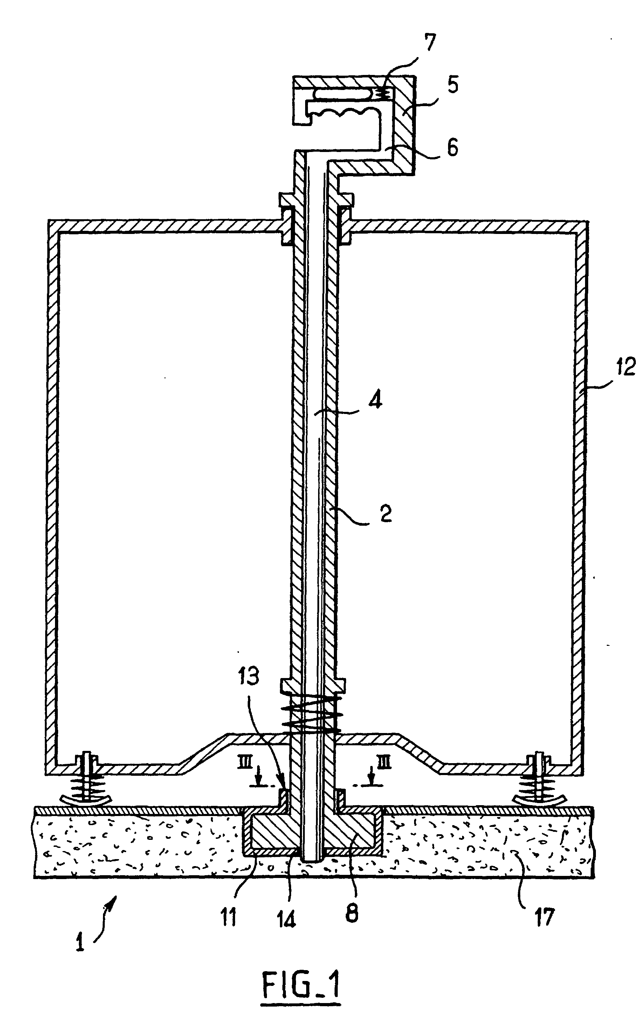

Les figures 1 à 3 illustrent un dispositif 1 comprenant essentiellement une console centrale 12 une glissière 11 et des moyens de guidage et de retenue définis ici par un chariot ou patin 8 coulissant à l'intérieur de la glissière 11 et disposé à l'extrémité d'une tige de commande 2 tubulaire.

La glissière, 11 noyée dans le plancher 17 d'un véhicule, s'étend suivant une direction d'allongement 10 et présente latéralement une ouverture définissant une rainure 13 s'étendant également suivant la direction d'allongement 10. Cette rainure 13 comprend une zone de coulissement 15 et une zone d'extraction 16 de plus grande largeur, perpendiculairement à la direction d'allongement 10.

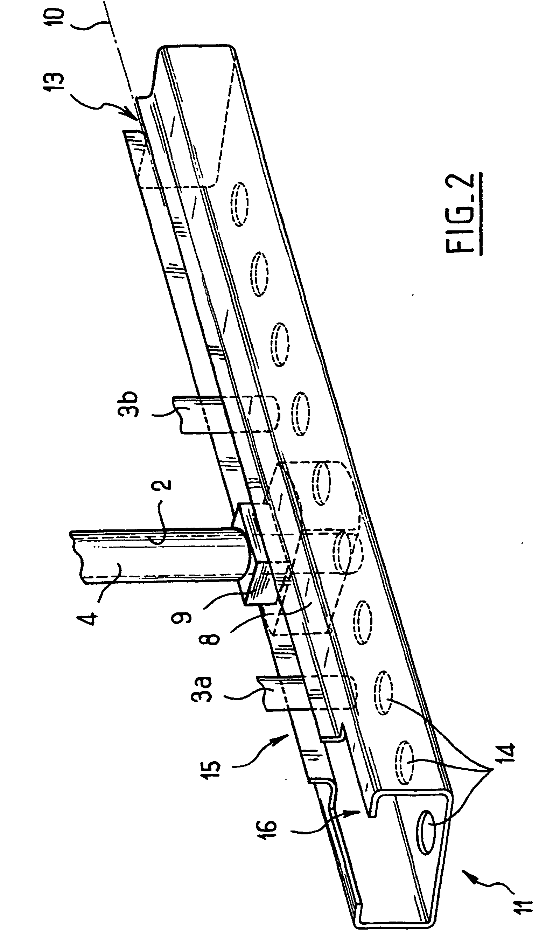

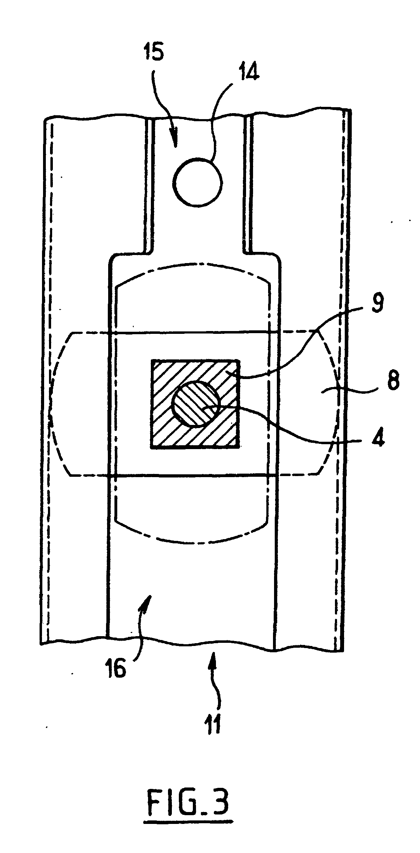

L'ensemble tige de commande 2 et patin 8 est mobile en rotation par rapport à la console centrale 12 selon un axe perpendiculaire à la direction de coulissement 10. Tel qu'illustré plus précisément à la figure 2, cet ensemble présente en outre une portion 9 de section sensiblement carrée disposée en regard de la rainure 13 dont la largeur est telle que ledit ensemble, et plus précisément sa portion 9, est bloqué en rotation par la rainure 13 lorsqu'il est en regard de la zone de coulissement 15 et est libre de tourner à l'intérieur de la glissière 11 lorsqu'il est en regard de la zone d'extraction 16, tel qu'illustré plus précisément la figure 3.

Le patin 8 est sensiblement rectangulaire. Il présente une longueur supérieure à la largeur de la rainure 13, y compris dans la zone extraction 16, de telle sorte que lorsqu'il est disposé en position de retenue, transversalement à la direction d'allongement 10, il est maintenu à l'intérieur de la glissière 11 qu'il se trouve en regard de la zone de coulissement 15 ou de la zone extraction 16. En revanche, sa largeur est comprise entre la largeur de la rainure 13 dans la zone de coulissement 15 et la largeur de la rainure 13 dans la zone extraction 16. Ainsi, lorsqu'il est disposé en position d'extraction, suivant la direction d'allongement 10, tel que représenté en trait mixte à la figure 3, il est maintenu à l'intérieur de leur glissière 11, s'il se trouve en regard de la zone de coulissement 15 et peut passer à travers la glissière 11, s'il se trouve en regard de la zone d'extraction 16.

La tige de commande creuse 2 traverse la console centrale 12 et présente à son extrémité supérieure une poignée de commande 5. La tige creuse 2 renferme une tige d'indexation 4 coulissant à l'intérieur de la tige creuse 2 et de même la poignée de commande 5 renferme une poignée de commande 6 associée à la tige d'indexation 4, coulissant à l'intérieur de la poignée de commande 5, de sorte que les poignées de commande 5,6, la tige de commande 2 et la tige indexation 4 tournent ensemble à l'intérieur de la console 12.

La tige centrale 4 est mobile entre une position verrouillée dans laquelle son extrémité opposée à la poignée de commande 6 s'engage dans des trous d'indexation 14 ménagés dans la glissière 11, en regard de la rainure 13, et une position de coulissement dans laquelle la tige centrale 4 est désengagée des trous d'indexation 14. Lorsque la tige centrale 4 est en position verrouillée, elle bloque la console centrale 12 dans une position donnée. Lorsque la tige centrale 4 est en position de coulissement, elle libère la console centrale 12 et lui permet de coulisser le long de la glissière 11 guidée par le patin 8. Un ressort de compression 7, disposés entre les poignées de commande 5 et 6 tend à amener la tige d'indexation 4 en position verrouillée.

Le dispositif comprend en outre deux ergots 3a, 3b liés à la console centrale 12, disposés de part et d'autre des moyens de guidage et de retenue 2, 8 et s'engageant dans la rainure 13 pour empêcher la console centrale 12 de pivoter autour d'eux.

## Revendications

1. Dispositif (1) pour habitacle (17) de véhicule automobile, comprenant :
- une console centrale (12),
- une glissière (11) destinée à être fixée à l'habitacle du véhicule, s'étendant suivant une direction d'allongement longitudinale (10) du véhicule et présentant une ouverture latérale définissant une rainure (13) s'étendant également suivant cette direction longitudinale,
- des moyens de guidage et de retenue (2, 8) coulissant à l'intérieur de la glissière, lesdits moyens de guidage et de retenue (2, 8) s'étendant à travers ladite ouverture latérale (13) et étant liés à la console (12).
**caractérisé en ce que** lesdits moyens de guidage et de retenue (2, 8) sont mobiles par rapport à la glissière (11) entre une position de retenue dans laquelle ils sont maintenus à l'intérieur de la glissière (11) et une position d'extraction autorisant la désolidarisation de la glissière (11) en passant à travers ladite ouverture latérale (13).

2. Dispositif selon la revendication 1, **caractérisé en ce que** le mouvement des moyens de guidage et de retenue (2, 8) entre la position de retenue et la position d'extraction comprend un mouvement de rotation.

3. Dispositif selon la revendication 2, **caractérisé en ce que** les moyens de guidage et de retenue (2, 8) ne sont. mobiles entre la position de retenue et la position d'extraction que dans au moins une zone déterminée le long de la glissière (11).

4. Dispositif selon la revendication 3, **caractérisé en ce que** :
- l'ouverture latérale (13) présente au moins une zone de coulissement (15) présentant transversalement à la direction longitudinale une largeur sensiblement constante et une zone d'extraction (16) de plus grande largeur, transversalement à la direction longitudinale,
- les moyens de guidage et de retenue (2, 8) comprennent un patin (8) de section non circulaire pivotant à l'intérieur de la glissière (11) entre lesdites positions relatives de retenue et d'extraction,
- en position de retenue, le patin (8) présente une largeur supérieure à celle de l'ouverture latérale (13), y compris dans la zone d'extraction,
- en position d'extraction, le patin (8) présente une largeur comprise entre la largeur de l'ouverture latérale (13) dans la zone de coulissement (15) et la largeur de l'ouverture latérale (13) dans la zone d'extraction (16).

5. Dispositif selon la revendication 4, **caractérisé en ce que** le patin (8) est de forme sensiblement rectangulaire.

6. Dispositif selon la revendication 4 ou 5, **caractérisé en ce que** :
- les moyens de guidage et de retenue (2, 8) comprennent en outre une tige de commande (2) liée à l'une de ses extrémités au patin (8) et passant à travers ladite ouverture latérale (13), et
- la tige de commande présente en regard de l'ouverture latérale (13) une section (9) non circulaire de largeur sensiblement égale à la largeur de l'ouverture latérale (13) dans la zone de coulissement (15), afin d'empêcher la rotation des moyens de guidage et de retenue (2, 8) relativement à la glissière (11) dans ladite zone de coulissement (15).

7. Dispositif selon la revendication 6, **caractérisé en ce que** la tige de commande (2) traverse la console centrale (12).

8. Dispositif selon l'une quelconque des revendications précédentes, **caractérisé en ce qu'**il comporte des moyens d'indexation en position pour immobiliser la console (12), comprenant:
- des trous (14) disposés dans la glissière (11) et répartis suivant la direction longitudinale (10) de celle-ci, et
- une tige d'indexation (4) liée aux moyens de guidage et de retenue (2, 8) mobile entre une position active dans laquelle elle s'insère dans les trous (14) de la glissière (11) et une position inactive escamotée autorisant un coulissement suivant la direction longitudinale entre les moyens de guidage et de retenue (2, 8) et la glissière (11).

9. Dispositif selon la revendication 8 lorsqu'elle dépend de l'une des revendications 6 et 7, **caractérisé en ce que** :
- la tige de commande (2) est creuse et reçoit intérieurement la tige d'indexation (4),
- la tige de commande (2) et la tige d'indexation (4) sont chacunes reliées à une poignée de commande (5, 6), lesquelles poignées de commande (5, 6) coulissent l'une dans l'autre.

10. Dispositif selon l'une quelconque des revendications 2 à 9, **caractérisé en ce qu'**il comprend en outre au moins un ergot (3a, 3b) lié à la console centrale (12) et coulissant dans la glissière (11) pour empêcher la rotation de la console (12) autour des moyens de guidage et de retenue (2, 8).

## Patentansprüche

1. Vorrichtung (1) für den Innenraum (17) eines Kraftfahrzeugs, bestehend aus:
- einer Mittelkonsole (12),
- einer Gleitschiene (11) zur Befestigung in dem Innenraum des Fahrzeugs, die sich entlang einer Längsrichtung (10) des Fahrzeugs erstreckt und eine seitliche Öffnung aufweist, die eine Nut (13) bildet, die sich ebenfalls entlang dieser Längsrichtung erstreckt,
- Führungs- und Haltemittel (2, 8) die im Inneren der Gleitschiene gleiten, wobei sich die Führungs- und Haltemittel (2, 8) quer zu der seitlichen Öffnung (13) erstrecken und mit der Konsole (12) verbunden sind,
**dadurch gekennzeichnet, dass** die Führungs- und Haltemittel (2, 8) gegenüber der Gleitschiene (11) zwischen einer Halteposition, in der sie im Inneren der Gleitschiene (11) festgehalten sind und einer Auszugposition, die ihre Entfernung aus der Gleitschiene (11) erlaubt, indem sie durch die seitliche Öffnung (13) hindurchgehen, beweglich sind.

2. Vorrichtung nach Anspruch 1, **dadurch gekennzeichnet, dass** die Bewegung der Führungs- und Haltemittel (2, 8) zwischen der Halteposition und der Auszugposition aus einer Drehbewegung besteht.

3. Vorrichtung nach Anspruch 2, **dadurch gekennzeichnet, dass** die Führungs- und Haltemittel (2, 8) nur in wenigstens einem Abschnitt entlang der Gleitschiene (11) zwischen der Halteposition und der Auszugposition beweglich sind.

4. Vorrichtung nach Anspruch 3, **dadurch gekennzeichnet, dass**:
- die seitliche Öffnung (13) wenigstens einen Gleitabschnitt (15) aufweist, der quer zur Längsrichtung eine im Wesentlichen konstante Breite besitzt, sowie quer zur Längsrichtung einen Auszugabschnitt (16) mit größerer Breite,
- die Führungs- und Haltemittel (2, 8) einen Schuh (8) mit nicht kreisförmigem Querschnitt besitzen, der sich im Inneren der Gleitschiene (11) zwischen den relativen Halte- und Auszugpositionen dreht,
- der Schuh (8) in der Halteposition eine Breite aufweist, die größer ist, als die der seitlichen Öffnung (13) einschließlich des Auszugabschnitts,
- der Schuh (8) in der Auszugposition eine Breite aufweist, die zwischen der Breite der seitlichen Öffnung (13) in dem Gleitabschnitt (15) und der Breite der seitlichen Öffnung (13) in dem Auszugabschnitt (16) liegt.

5. Vorrichtung nach Anspruch 4, **dadurch gekennzeichnet, dass** der Schuh (8) eine im Wesentlichen rechteckige Form aufweist.

6. Vorrichtung nach Anspruch 4 oder 5, **dadurch gekennzeichnet, dass**
- die Führungs- und Haltemittel (2, 8) außerdem einen Steuerstab (2) besitzen, der mit einem Ende mit dem Schuh (89 verbunden ist und durch die seitliche Öffnung (13) hindurch ragt und
- der Steuerstab gegenüber der seitlichen Öffnung einen nicht kreisförmigen Querschnitt bietet, der im Wesentlichen der Breite der seitlichen Öffnung (13) im Gleitabschnitt (15) entspricht, um eine Drehung der Führungs- und Haltemittel (2, 8) gegenüber der Gleitschiene (11) in dem Gleitabschnitt (15) zu verhindern.

7. Vorrichtung nach Anspruch 6, **dadurch gekennzeichnet, dass** der Steuerstab (2) durch die Mittelkonsole (12) hindurch ragt.

8. Vorrichtung nach einem der vorhergehenden Ansprüche, **dadurch gekennzeichnet, dass** sie Mittel zum Verriegeln an Ort und Stelle besitzt, um die Konsole (12) festzustellen, bestehend aus:
- Löchern (14), die in der Gleitschiene (11) angeordnet und in deren Längsrichtung verteilt sind, und
- einer Verriegelungsstange (4), die mit den Führungsmitteln (2, 8) verbunden ist, und die zwischen einer aktiven Position, in der sie in einem der Löcher (14) der Gleitschiene (11) steckt und einer inaktiven, eingezogenen Position, die ein Gleiten in Längsrichtung zwischen den Führungs- und Haltemitteln (2, 8) und der Gleitschiene (11) erlaubt, beweglich gehalten ist.

9. Vorrichtung nach Anspruch 8, sofern dieser von einem der Ansprüche 6 und 7 abhängt, **dadurch gekennzeichnet, dass**:
- der Steuerstab (2) hohl ist und die Verriegelungsstange (4) in sich aufnimmt,
- der Steuerstab (2) und die Verriegelungsstange (4) jeweils mit einem Bedienungsgriff (5, 6) verbunden sind, wobei die Bedienungsgriffe (5, 6) ineinander gleiten.

10. Vorrichtung nach einem der Ansprüche 2 bis 9, **dadurch gekennzeichnet, dass** sie außerdem mindestens einen Ankerstift (3a, 3b) aufweist, der mit der Mittelkonsole (12) verbunden ist und der in der Gleitschiene (11) gleitet, um die Drehung der Konsole (12) um die Führungs- und Haltemittel (2, 8) zu verhindern.

## Claims

1. Device (1) for the passenger compartment (17) of a motor vehicle, comprising:
- a central console (12),
- a slideway (11) intended to be fixed to the passenger compartment of the vehicle, extending in a longitudinal direction of elongation (10) of the vehicle and having a lateral opening defining a groove (13) also extending in that longitudinal direction,
- guiding and retaining means (2, 8) sliding within the slideway, said guiding and retaining means (2, 8) extending through said lateral opening (13) and being linked to the console (12),
**characterised in that** said guiding and retaining means (2, 8) are movable with respect to the slideway (11) between a retaining position in which they are maintained within the slideway (11) and a removal position permitting disconnection from the slideway (11) by passing through said lateral opening (13).

2. Device according to claim 1, **characterised in that** the movement of the guiding and retaining means (2, 8) between the retaining position and the removal position comprises a rotational movement.

3. Device according to claim 2, **characterised in that** the guiding and retaining means (2, 8) are movable between the retaining position and the removal position only in at least one specific zone along the slideway (11).

4. Device according to claim 3, **characterised in that**:
- the lateral opening (13) has at least one sliding zone (15) having transversely to the longitudinal direction a substantially constant width and a removal zone (16) of greater width, transversely to the longitudinal direction,
- the guiding and retaining means (2, 8) comprise a runner (8) of non-circular section pivoting within the slideway (11) between said relative retaining and removal positions,
- in the retaining position, the runner (8) has a width greater than that of the lateral opening (13), including in the removal zone,
- in the removal position, the runner (8) has a width between the width of the lateral opening (13) in the sliding zone (15) and the width of the lateral opening (13) in the removal zone (16).

5. Device according to claim 4, **characterised in that** the runner (8) is substantially rectangular in shape.

6. Device according to claim 4 or 5, **characterised in that**:
- the guiding and retaining means (2, 8) further comprise a control rod (2) linked at one of its ends to the runner (8) and passing through said lateral opening (13), and
- the control rod has opposite the lateral opening (13) a non-circular section (9) of a width substantially equal to the width of the lateral opening (13) in the sliding zone (15), in order to prevent the rotation of the guiding and retaining means (2, 8) relative to the slideway (11) in said sliding zone (15).

7. Device according to claim 6, **characterised in that** the control rod (2) passes through the central console (12).

8. Device according to any one of the preceding claims, **characterised in that** it includes position indexing means for immobilising the console (12), comprising:
- holes (14) disposed in the slideway (11) and distributed in the longitudinal direction (10) thereof, and
- an indexing rod (4), linked to the guiding and retaining means (2, 8), movable between an active position in which it is inserted into the holes (14) of the slideway (11) and a retracted inactive position permitting sliding in the longitudinal direction between the guiding and retaining means (2, 8) and the slideway (11).

9. Device according to claim 8 when it refers to one among claims 6 and 7, **characterised in that**:
- the control rod (2) is hollow and receives internally the indexing rod (4),
- the control rod (2) and the indexing rod (4) are each connected to a control handle (5, 6), which control handles (5, 6) slide one in the other.

10. Device according to any one of claims 2 to 9, **characterised in that** it further comprises at least one lug (3a, 3b) linked to the central console (12) and sliding in the slideway (11) in order to prevent the rotation of the console (12) about the guiding and retaining means (2, 8).
